# EUROPEAN PATENT SPECIFICATION

(11) **EP 0 820 959 B1**
(45) Date of publication and mention of the grant of the patent: **02.10.2002**
(21) Application number: 97305503.1
(22) Date of filing: 23.07.1997
(51) Int. Cl.: B67D 5/04, F16L 37/30

(54) **Valve for a recovery system**
Ventil für Gasrückgewinnungssystem
Soupape pour système de récupération de vapeurs

(30) Priority: 26.07.1996 GB 9615753
(43) Date of publication of application: 28.01.1998
(73) Proprietor: GLYNWED PIPE SYSTEMS LIMITED, Sheldon, Birmingham B26 3AZ (GB)
(72) Inventor: Wilby, Melville, Fleet, Hampshire GU13 9EA (GB)
(74) Representative: Downing, Michael Philip

(56) References cited:
- GB-A- 1 121 491
- GB-A- 1 450 363
- US-A- 2 904 081
- US-A- 3 590 862
- US-A- 4 131 142
- US-A- 4 230 161
- US-A- 4 998 560

## Description

This invention relates to vapour recovery systems of the kind used to vent vapour from a tanker whilst it is being loaded with a product, typically a liquid, for example, petrol. In such a system a loading terminal may have a number of bays so that several tankers can be loaded simultaneously.

An empty tanker which is to be loaded with fuel must be connected to the product supply and also to a venting system so that vapour in the tanker, which is displaced by the product, can be removed. Each bay at a loading terminal should have a vapour inlet to receive the vapour which is vented from the tanker. When the loading terminal has several bays the vapour inlets are arranged in parallel and connected to a central collecting vessel.

The use of a recovery system is important because the vapour can be reclaimed to reduce waste and pollution can be minimized. In such a recovery system it is important to minimize product retention in valves and pipe work and to ensure that there are no leaks.

An important part of the system is a coupling between a vent outlet on the truck and the vapour inlet. The coupling must be such that there is a vapour tight seal when a truck coupler and terminal coupler are separated as well as when they are connected.

A non-return valve is desirable to prevent blow-back occurring when several tankers are connected to different bays at the loading terminal.

For a new system to be economically practical, the truck coupler and terminal coupler should be compatible with existing systems. In existing systems, poppet valves are used in the truck and terminal couplers and these obstruct the vapour flow. When a connection is being made between the truck and terminal coupler, the couplers are moved a pre-determined distance relative to one another, whilst contacting with one another but without being fully connected. This relative movement whilst the couplers are in contact with one another provides a horizontal stroke which is used to open the valve in each coupler. In conventional valves each poppet valve is opened by being raised from its seat by a distance which is substantially the same as said predetermined distance.

The poppet valves offer a significant resistance to flow of air and vapour. This causes a pressure drop in the system which is undesirable and could, *in extremis*, limit the rate at which the tanker is filled.

It is an object of this invention to alleviate this. In particular it is an object of this invention to provide a vapour recovery system in which pressure drop and fuel retention are minimized.

According to one aspect of the present invention there is provided a valve for a vapour recovery system comprising a body having an inlet and an outlet, a flap member hingedly attached to the body and a sealing ring mounted in the body, the flap member being seatable on the sealing ring to provide a vapour tight seal and being openable to provide a substantially unobstructed vapour flow path between the inlet and the outlet.

According to another aspect of the present invention there is provided a vapour recovery system incorporating a truck valve and a terminal valve, at least one of the valves comprising a body having an inlet and an outlet, a flap member hingedly attached to the body and a sealing ring mounted in the body, the flap member being seatable on the sealing ring to provide a vapour tight seal and being openable to provide a substantially unobstructed vapour flow path between the outlet and the inlet.

The vapour recovery system preferably includes a non return valve as defined in relation to the truck and terminal valve.

Preferably the or each valve includes a recess which can accommodate the flap member when the valve is open.

The non-return valve, when fitted, is preferably installed in a position well above the terminal valve and in an upright orientation so that the flap member closes under its own weight.

Preferably each of the valves includes a sight glass. Particularly preferred is a divided sight glass which allows fuel retention to be measured and the internals of the valve to be inspected.

Preferably a truck coupler is joined to the truck valve and a terminal coupler is joined to the terminal valve. In such a system, when the two couplers are brought together, part of the truck coupler may act on a sensing member in the terminal coupler. The sensing member can be directly or indirectly connected to the flap member in the terminal valve. When the connection is being made, the two couplers are moved relative to one another by a predetermined distance whilst the truck coupler is acting on the sensing member. Therefore, the sensing member is moved by said predetermined distance. The movement of the sensing member causes the flap member to move so that the terminal valve is opened.

Similarly, a part of the terminal coupler may act on a sensing member in the truck coupler when the two couplers are being connected. The sensing member can be directly or indirectly connected to the flap member in the truck valve. Therefore, the truck valve can be opened when the two couplers are brought together in a similar way to the terminal valve, as described above.

Preferably the terminal and/or truck valve includes means for causing at least part of the flap member to move a greater distance than said predetermined distance. Preferably said means converts the horizontal stroke available to effect displacement of the respective flap to open the valves, into a rotational movement of the flap. A lever effect is preferably used to provide a greater movement of the flap member so that it can be swung out of the vapour flow path.

Preferably the sensing member in the terminal valve is a pin which is acted on by a nose of the truck coupler. A seal between the truck and terminal couplers may be effected between the outer flank of this nose and a sealing ring mounted in the terminal coupler. The arrangement could of course be reversed, but this is not preferred as it would render the system incompatible with existing installations.

In conventional systems the poppet valves used are held shut by coil springs when the couplers are separated. To connect together the couplers, work must be done against the springs to open the valves. The amount of force required is large and increases as the couplers are brought together. This makes it difficult for the driver to make the connection between the truck and the terminal.

To alleviate this problem, the truck valve and terminal valve each preferably include a torsion spring which is arranged to act on the flap member with a near constant force. The torsion spring tends to close the valve. In a preferred configuration, the torsion spring acts centrally on the flap member.

In conventional systems a separate sensing valve is provided on the truck. The valve is automatically activated when the venting connection is made between the truck and the terminal. Because the sensing valve is displaced from the axis of the coupling it is susceptible to sticking and wear due to out of line loading. That is to say, the pin of the sensing valve can be subjected to large transverse forces whilst the connection is being made.

To alleviate this problem the truck valve preferably includes an integral sensing valve. This sensing valve may be automatically activated when the two couplers are brought together so that a shut off valve is opened.

An embodiment of the invention will now be described by way of an example with reference to the accompanying drawings in which:
Figure 1 is a schematic view of a vapour recovery system;
Figure 2 is a sectional side view of the truck and terminal coupling of the vapour recovery system shown in Figure 1;
Figure 3 is a sectional plan view of the truck and terminal couplers shown in Figure 2 when separated;
Figure 4 is a section on the line IV-IV in Figure 2;
Figure 5 is a section on the line V-V in Figure 2;
Figure 6 is a sectional side view of the non-return valve of the vapour recovery system shown in Figure 1; and
Figure 7 is a section on the line VII-VII in Figure 6.

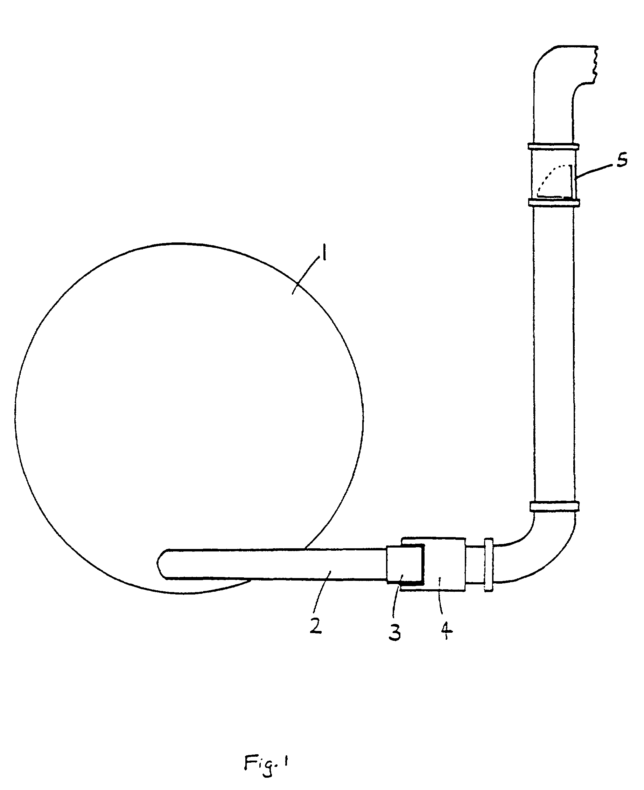

Figure 1 shows a vapour recovery system which comprises a tank 1 of a tanker which has a vent outlet 2. The vent outlet 2 terminates in a truck valve 3.

A loading terminal comprises a terminal valve 4, a non-return valve 5, and connecting pipes which run from the terminal valve 4 through the non-return valve 5, to a central collecting vessel (not shown). The non-return valve 5 is vertically orientated and disposed vertically above the terminal valve 4. Subject to compatibility with existing systems, the truck valve 3 and terminal valve 4 could of course be interchanged.

Together the truck valve 3 and the terminal valve 4 comprise a truck and terminal coupling.

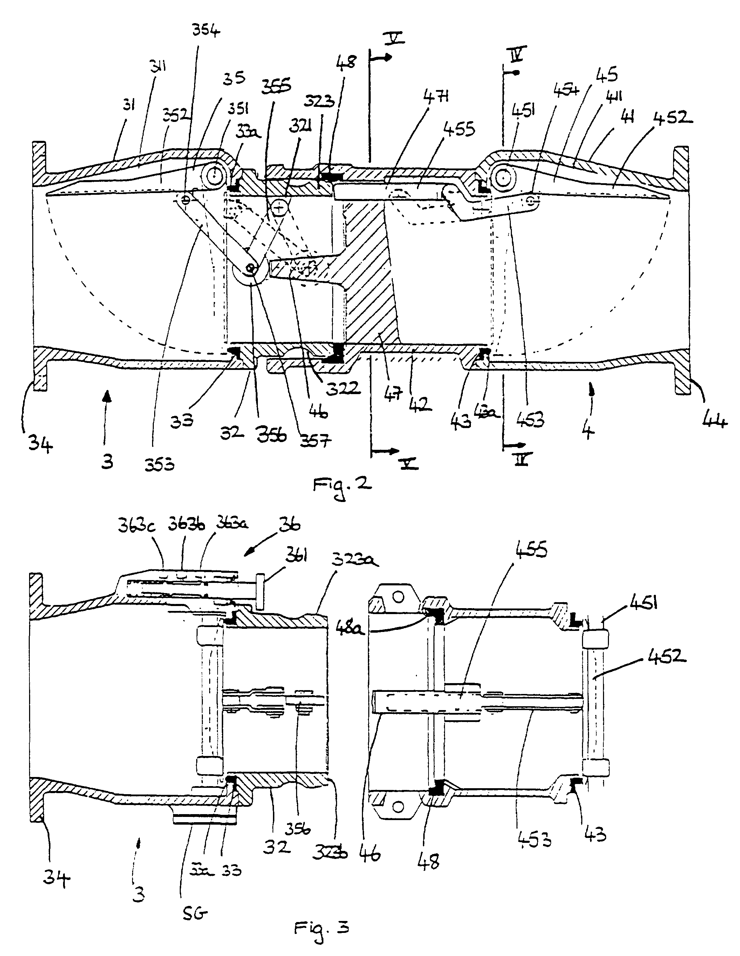

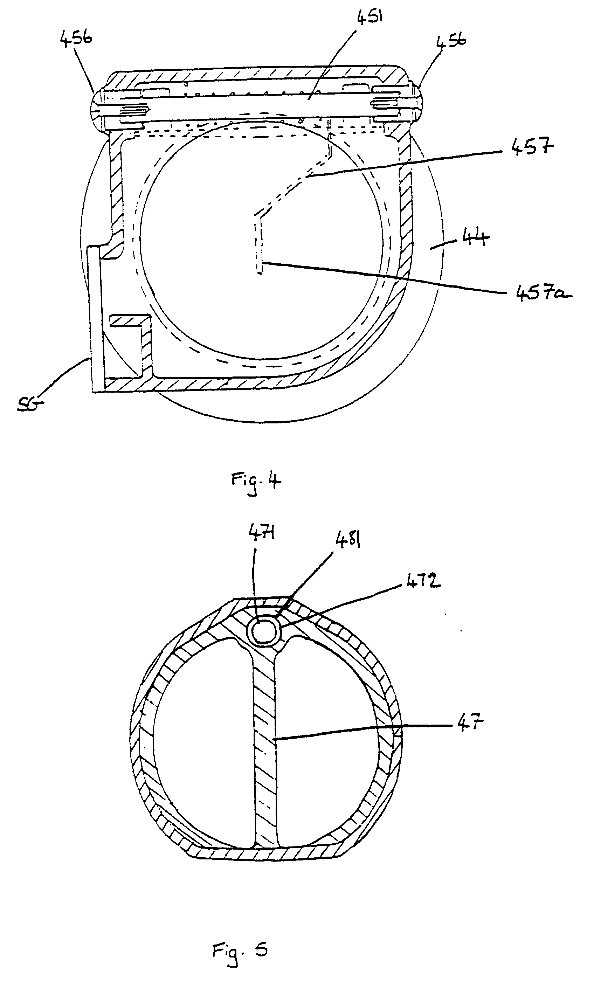

Figure 2 shows the truck valve 3 which comprises a body 31 and a truck coupler 32 which are joined together. A sealing ring 33 provides a seal between the body 31 and the truck coupler 32. A recess 31 is formed in the body 31. An outer end of the body 31 has a flange 34 to which the vent outlet 2 is connected.

A flap valve 35, comprising a flap member 352, is journaled on a hinge spindle 351 in the body 31. The sealing ring 33 has an annular projection 33a which protrudes into the body 31 around a bore of the coupler 32 to provide a seat for the flap member 352. One end of a first arm 353 is pivotally connected to the flap member 352 via a bracket 354. An opposite end of the first arm 353 is pivotally connected to one end of a second arm 355. Another end of the second arm 355 is pivotally connected to the truck coupler 32 via a bracket 321. A roller 356 is rotatably mounted on a spindle 357 by which the first arm 353 is pivotally connected to the second arm 355.

The truck coupler 32 includes an external annular groove 322 and a nose 323 which are designed to be compatible with existing couplers.

The terminal valve 4 comprises a body 41 and a terminal coupler 42. A recess 411 is formed in the body 41. One end of the body 41 terminates in a flange 44 to which a pipe can be connected. The body 41 and the terminal coupler 42 are joined together. The join is sealed with a sealing ring 43.

A flap valve 45, comprising a flap member 452, is journaled on a hinge spindle 451 in the body 41. The sealing ring 43 has an annular projection 43a which protrudes into the body 41 around a bore of the coupler 42 to provide a seat for the flap member 452. A first end of an arm 453 is pivotally connected to the flap member 452 via a bracket 454. The other end of this arm 453 is pivotally connected to a sensing pin 455.

A frusto-conical axial projection 46 is provided in the terminal coupler 42. The axial projection 46 is supported by a cross support 47. A hole 471 is provided in the cross support 47. A bearing 472, which may be made of either brass or plastic, is provided in the hole 471. The sensing pin 455 can pass through the bearing 472. A specially formed lip sealing ring 48 is mounted in the terminal coupler 42 and is arranged so that its sealing action increases as the pressure of a fluid to be contained increases. The lip sealing ring 48 has a hole 481 through which the sensing pin 455 can pass. The form of the axial projection 46 and the cross support 47 is intended to minimize obstruction of the vapour flow.

Figure 3 shows the truck valve 3 further comprises a sensing valve 36 which has a piston 361 and first, second and third ports 363a-363c.

Figure 4 shows that in the terminal valve 4, the hinge spindle 451 of the flap valve 45 is held in the body 41 by two specially formed end caps 456 which are arranged dimensionally to correctly position the flap member 452. The end caps 456 are retained on the spindle 451 by screws. The need for circlips on the hinge spindle 451 is eliminated by the use of the specially formed end caps 456. The number of loose parts is therefore reduced.

A torsion spring 457 is wound around the hinge spindle 451. The torsion spring 457 has a cranked end tang 457a so that the spring 457 acts on the flap member 452 at a certain position. This position is in line with the midpoint of the hinge spindle 451 but is displaced slightly further from the hinge spindle 451 than-the dead centre of the flap member 452. Because the spring acts at this position , the flap member 452 tends to contact the side of the annular projection 43a opposite the hinge spindle 451 before fully seating to provide a seal all around annular projection 43a. The torsion spring 457 tends to keep the flap member 452 pressed firmly against the annular projection 43a of the sealing ring 43.

The flap valve 35 in the body 31 of the truck valve 3 is similarly retained by end caps (not shown). The flap valve 35 of the truck valve 3 also comprises a torsion spring (not shown) which is wound around the hinge spindle 351 and has a cranked end tang so that the spring acts a certain position on the flap member 352. The position at which the spring acts and the effect given are analogous to those described above in relation to the terminal valve 4. The torsion spring tends to keep the flap member 352 pressed firmly against the annular projection 33a of the sealing ring 33.

Referring to Figure 5, the interior of the truck valve 3 and the terminal valve 4 are flattened at the bottom to reduce product retention. Further, the interior of the terminal valve coupler 42 is distorted outwardly from a circular form to provide strength around the hole 471.

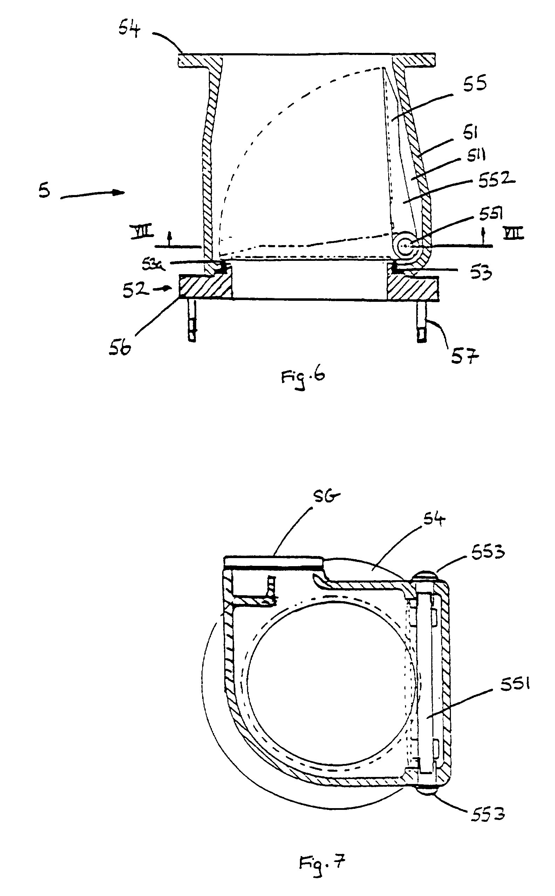

Figure 6 shows the non-return valve 5 which has a body 51 and a front end 52 which are joined together, the join being sealed by a sealing ring 53. A recess 511 is formed in the body 51. An outer end of the body 51 terminates in a flange 54 and an outer end of the front end 52 terminates in a connecting plate 56 which is provided with studs 57. The flange 54 and the connecting plate 56 are used for connecting pipes to the non-return valve 5.

A flap valve 55, comprising a flap member 552, is journaled on a hinge spindle 551 in the body 51. The sealing ring 53 has an annular projection 53a which protrudes into the body 51 around a bore of the front end 52 to provide a seat for the flap member 552.

Figure 7 shows the hinge spindle 551 which is retained in the body 51 by specially formed end caps 553 in the same way as the hinge spindles are retained in the truck and terminal valves. However, there is no torsion spring acting on the flap valve 55 in the non-return valve 5.

The bodies 31, 41, 51 of the truck valve 3, terminal valve 4 and non-return valve 5 consist largely of common components and therefore, the bodies can be manufactured as a sub-assembly. For each of the valves, a body is used and the appropriate front end or coupler is fixed to the body.

All of the bodies also include a divided sight glass SG which has two functions. The lower section functions in the normal way and has a ball which floats in any fluid present and therefore gives an indication of product retention. The upper half, however, gives an unobstructed view of the inside of the valve so that it can be inspected.

When a tanker is to be loaded with fuel, the driver can connect the liquid supply to the tanker and the vent outlet to the venting system. The vent outlet 2 of the tanker terminates in the truck valve 3. The truck valve 3 must be inserted and vapour tightly connected to the terminal valve 4. To do this the driver inserts the truck coupler 32 into the terminal coupler 42. The two parts are brought firmly together using the standard cam and groove arrangement. A cam (not shown) is fixed via a lever arrangement to the terminal valve 4. The cam interacts with the external annular groove 322 of the truck valve 3 and the driver operates the lever mechanism to firmly pull the two couplers together. As the two couplers are brought together a number of sealing and opening actions are accomplished simultaneously.

The seal between the truck coupler 3 and the terminal coupler 4 is achieved around an outer surface 323a of the truck coupler nose 323. This outer surface 323a seals against an inner surface 48a of the lip sealing ring 48. A front surface 323b of the nose 323 also contacts against the sealing ring 48 but this does not provide the primary seal.

Because the seal between the couplers is effected between the outer surface 323a of the nose and the inner surface 48a of the lip sealing ring 48, direct impact between the nose 323 and the sensing pin 455 is ensured. However, the action of the front surface 323b of the nose 323 on other parts of the lip sealing ring 48 is important as it gives the required 'feel', due to its resilience, for the standard cam and groove connectors.

As the two couplers are brought together, the flap valve 45 of the terminal valve 4 is opened in the following way. The nose 323 of the truck coupler 32 pushes the sensing pin 445 in a longitudinal direction which causes the arm 453 to move. As the arm 453 moves, it pushes on the flap member 452 which is then lifted from the annular projection 43a of the sealing ring 43 and pushed into a fully opened position, as shown in Figure 2. In the fully open position, the flap member 452 is accommodated in the recess 411 so that obstruction of the vapour flow path is minimized. The arrangement of the sensing pin 445, the arm 453 and the flap member 452 is such that the movement of a distal end of the flap member 452 is greater than the movement of the sensing pin 445 when the couplers 32 and 42 are connected together. This is because the flap member 452 is pivoted about the hinge spindle 451 and the sensing pin 445 acts on the flap member 452 via the arm 453 at a point close to the hinge spindle 451.

The movement of the flap member 45 is against a near constant resistance of the torsion spring 457. When the two couplers are disconnected the flap member 452 is brought back into sealing contact with the annular projection 43a of the sealing ring 43 by the action of the torsion spring 457.

The flap valve 35 of the truck coupler is also opened as the two couplers are pushed together. The axial projection 46 acts on the roller 356 which in turn causes the first and second arms 353 and 355 to move so that the flap member 352 rotates about the hinge spindle 351. The flap member 352 is moved into a fully open position and is accommodated in the recess 311 to minimize obstruction of the vapour flow path. When the two couplers are connected together, because of the action of the first and second arms 353 and 355, the movement of a distal end of the flap member 352 is greater than that of the roller 356. This is because the flap member 352 pivots about the hinge spindle 351 and the first arm 353 acts on the flap member 352 at a point close to the hinge spindle 351.

The opening of the valve is resisted by a near constant force provided by the torsion spring (not shown) which is wound around the hinge spindle 351. This means that when the two couplers are disconnected, the flap valve 35 of the truck valve 3 closes against the annular projection 33a of the sealing ring 33 under the action of the spring.

Ghost lines in Figure 2, show the positions of the flap valves 35, 45 and associated mechanisms when they are in a closed state, that is to say, when the two halves of the coupling are not connected to one another.

As can be seen from Figures 2 to 5 when the flap valves are open, the path for the vapour through the couplers is substantially unimpeded.

The sensing valve 36 controls a shut off valve within the tanker which prevents vapour flow before the connection with the terminal is properly effected. Before the two parts of the coupling are connected together, the sensing valve piston 361 is in such a position that the first port 363a is connected to the second port 363b. In this state, a signal passes along a control line to the shut off valve. This signal ensures that the shut off valve remains closed. However, when the two parts of the coupling are brought together, the piston 361 is moved so that said second and third ports 363b, 363c are connected together and a signal is sent so that the shut off valve is opened.

The sensing valve 363 is formed integrally with the truck valve 3 so that the piston 361 is as close to the centre of the truck valve 3 as possible. This has advantages because the amount of sideways loading which the piston experiences is minimised and this reduces wear and the chance of sticking.

Referring to Figure 1, the non-return valve 5 must be placed well above the vent outlet 2 of the tanker. This ensures that a head of product does not build up above the valve 5. Such a head would tend to prevent the flap valve 55 from opening. Further, the non-return valve 5 must be installed in a vertical position. This is because the non-return valve does not include a torsion spring to return the flap valve 55 to a closed position but rather relies on the weight of the flap member 552. Because there is no torsion spring acting on the flap valve 55, only a very low pressure is required to open the flap valve to allow the vapour to be discharged from the tanker. In the closed position the flap member 552 is seated on the annular projection 53a. In a fully open position, the flap member 552 is accommodated in the recess 51 so that obstruction of the vapour flow path is minimized.

The non-return valve 5 prevents vapour flowing back from the centralised collecting system to the tanker. This is especially important when more than one tanker is connected to the system but while some are being loaded with fuel others are merely connected and are not discharging any vapour.

The non-return valve 5 can also act as a safety valve. When the truck valve 3 is disconnected from the terminal valve 4 it is important that the flap valve 45 of the terminal valve 4 is fully closed to prevent vapour escaping into the environment. If a malfunction occurs or debris obstructs the flap member 452, it may not properly seat on the annular projection 43a of the sealing ring 43, in which case there is a path through which vapour might escape. However, the non-return valve effectively seals against any vapour flow in a direction opposite to the desired direction. This means that the only vapour that could escape is that which might be present between the non-return valve 5 and the terminal valve 4.

The design of the valves ensures that there is almost no pressure drop across them when they are open and that leakages are minimized.

## Claims

1. A valve (3,4) for a vapour recovery system comprising a body having an inlet and an outlet, a flap member (352,452) hingedly (351,451)a ttached to the body (31,41) and a sealing ring (33,43) mounted in the body, the flap member being seatable on the sealing ring to provide a vapour tight seal and being openable to provide a substantially unobstructed vapour flow path between the inlet and the outlet.

2. A vapour recovery system incorporating a truck valve (3) and a terminal valve (4), at least one of the valves being according to claim 1.

3. A vapour recovery system according to claim 2 wherein the at least one valve is the truck valve.

4. A vapour recovery system incorporating a truck valve (3) and a terminal valve (4), each valve being according to claim 1.

5. A vapour recovery system according to any one of claims 2 to 4 including a non-return valve (5), the non-return valve (5) being according to claim 1.

6. A vapour recovery system according to claim 5 wherein the non-return valve (5) is situated after the truck valve (3) and the terminal valve (4) in order of vapour flow during discharge.

7. A vapour recovery system according to claim 5 or claim 6 wherein the non-return valve (5) is installed in a position above the terminal valve (3) and in an upright orientation such that the flap member (55) closes under its own weight.

8. A vapour recovery system according to any one of claims 2 to 7 wherein the or each valve (3,4,5) includes a recess (311,411,511) which can accommodate the flap member when the valve is open.

9. A valve (3,4) according to claim 1 wherein the valve (3,4) includes a recess which can accommodate the flap member when the valve is open.

10. A vapour recovery system according to any one of claims 2 to 7 wherein the or each valve includes a sight glass (SG).

11. A valve according to claim 1 wherein the valve includes a sight glass (SG).

12. A vapour recovery system according to claim 10 or a valve according to claim 1 wherein the sight glass (SG) is a divided sight glass which allows fuel retention to be measured and the internals of the valve to be inspected.

13. A vapour recovery system according to any one of claims 2 to 12 wherein a truck coupler (32) is joined to the truck valve (3) and a terminal coupler (42) is joined to the terminal valve (4).

14. A vapour recovery system according to claim 13 in which, when the two couplers (32,42) are brought together, part of the truck coupler (32) acts on a sensing member in the terminal coupler (42), the sensing member being directly or indirectly connected to the flap member (45) in the terminal valve (4).

15. A vapour recovery system according to claim 14 in which during connection the two couplers are moved relative to one another by a predetermined distance whilst the truck coupler (32) is acting on the sensing member, movement of the sensing member causing the flap member to move so that the terminal valve (4) is opened.

16. A vapour recovery system according to any one of claims 13 to 15 in which a part of the terminal coupler (42) acts on a sensing member in the truck coupler when the two couplers are being connected, the sensing member being directly or indirectly connected to the flap member (352) in the truck valve (3).

17. A vapour recovery system according to claim 16 in which during connection the two couplers (32,42) are moved relative to one another by a predetermined distance whilst the terminal coupler (42) is acting on the sensing member, movement of the sensing member causing the flap member to move so that the truck valve (3) is opened.

18. A vapour recovery system according to any one of claims 15 or 17 wherein the terminal (4) and/or truck (3) valve includes means for causing at least part of the flap member to move a greater distance than said predetermined distance.

19. A vapour recovery system according to claim 18 wherein said means converts the horizontal stroke available to effect displacement of the respective flap (352,452) to open the valves into a rotational movement of the flap.

20. A vapour recovery system according to claim 19 wherein said means operates by a lever effect to provide a greater movement of the flap member (352,452) so that it can be swung out of the vapour flow path.

21. A vapour recovery system according to any one of claims 14 to 20 wherein the sensing member in the terminal valve (4) is a pin (455) which is acted on by a nose (323) of the truck coupler.

22. A vapour recovery system according to claim 21 wherein a seal between the truck (32) and terminal (42) couplers is effected between the outer flank of this nose (323) and a sealing ring mounted in the terminal coupler (42).

23. A valve according to claim 1 or a vapour recovery system according to any one of claims 2 to 22 in which the, an or each valve includes a torsion spring (457) which is arranged to act on the flap member (352,452) thereby to close same.

24. A valve or a vapour recovery system according to claim 23 in which the torsion spring (457) acts centrally on the flap member.

25. A vapour recovery system according to any one of claims 2 to 24 wherein the truck valve (3) includes an integral sensing valve.

26. A vapour recovery system according to claim 25 wherein the sensing valve is automatically activated when the two couplers (32,42) are brought together so that a shut off valve is opened.

## Patentansprüche

1. Ventil (3, 4) für ein Dampfrückgewinnungssystem, umfassend einen Körper mit einem Einlass und einem Auslass, ein Klappenelement (352, 452), das schwenkbar (351, 451) an dem Körper (31, 41) angebracht ist, und einen in dem Körper montierten Dichtungsring (33, 43), wobei das Klappenelement auf dem Dichtungsring aufliegen kann, um einen dampfdichten Verschluss zu bilden, und geöffnet werden kann, um einen im Wesentlichen ungehinderten Dampfströmungspfad zwischen dem Einlass und dem Auslass zu bilden.

2. Dampfrückgewinnungssystem mit einem Zugwagenventil (3) und einem Terminalventil (4), wobei wenigstens eines der Ventile Anspruch 1 entspricht.

3. Dampfrückgewinnungssystem nach Anspruch 2, wobei das wenigstens eine Ventil das Zugwagenventil ist.

4. Dampfrückgewinnungssystem mit einem Zugwagenventil (3) und einem Terminalventil (4), wobei jedes Ventil Anspruch 1 entspricht.

5. Dampfrückgewinnungssystem nach einem der Ansprüche 2 bis 4, mit einem Rückschlagventil (5), wobei das Rückschlagventil (5) Anspruch 1 entspricht.

6. Dampfrückgewinnungssystem nach Anspruch 5, bei dem sich das Rückschlagventil (5) hinter dem Zugwagenventil (3) und dem Terminalventil (4) in der Reihenfolge des Dampfflusses beim Entladen befindet.

7. Dampfrückgewinnungssystem nach Anspruch 5 oder Anspruch 6, bei dem das Rückschlagventil (5) in einer Position oberhalb des Terminalventils (3) und in einer aufrechten Ausrichtung installiert ist, so dass das Klappenelement (55) unter seinem eigenen Gewicht schließt.

8. Dampfrückgewinnungssystem nach einem der Ansprüche 2 bis 7, bei dem das oder jedes Ventil (3, 4, 5) eine Ausnehmung (311, 411, 511) aufweist, die das Klappenelement aufnehmen kann, wenn das Ventil offen ist.

9. Ventil (3, 4) nach Anspruch 1, bei dem das Ventil (3, 4) eine Ausnehmung aufweist, die das Klappenelement aufnehmen kann, wenn das Ventil offen ist.

10. Dampfrückgewinnungssystem nach einem der Ansprüche 2 bis 7, wobei das oder jedes Ventil ein Schauglas (SG) beinhaltet.

11. Ventil nach Anspruch 1, wobei das Ventil ein Schauglas (SG) beinhaltet.

12. Dampfrückgewinnungssystem nach Anspruch 10 oder ein Ventil nach Anspruch 1, wobei das Schauglas (SG) ein geteiltes Schauglas ist, durch das der zurückgehaltene Kraftstoff gemessen und das Innere des Ventils inspiziert werden kann.

13. Dampfrückgewinnungssystem nach einem der Ansprüche 2 bis 12, bei dem eine Zugwagenkupplung (32) mit dem Zugwagenventil (3) und eine Terminalkupplung (42) mit dem Terminalventil (4) verbunden ist.

14. Dampfrückgewinnungssystem nach Anspruch 13, bei dem, wenn die beiden Kupplungen (32, 42) zusammengebracht werden, ein Teil der Zugwagenkupplung (32) auf ein Fühlelement in der Terminalkupplung (42) wirkt, wobei das Fühlelement in dem Terminalventil (4) direkt oder indirekt mit dem Klappenelement (45) verbunden ist.

15. Dampfrückgewinnungssystem nach Anspruch 14, bei dem während des Verbindens die beiden Kupplungen relativ zueinander um eine vorbestimmte Entfernung bewegt werden, während die Zugwagenkupplung (32) auf das Fühlelement wirkt, wobei die Bewegung des Fühlelementes eine Bewegung des Klappenelementes bewirkt, so dass das Terminalventil (4) öffnet.

16. Dampfrückgewinnüngssystem nach einem der Ansprüche 13 bis 15, bei dem ein Teil der Terminalkupplung (42) auf ein Fühlelement in der Zugwagenkupplung wirkt, wenn die beiden Kupplungen verbunden werden, wobei das Fühlelement direkt oder indirekt mit dem Klappenelement (352) in dem Zugwagenventil (3) verbunden ist.

17. Dampfrückgewinnungssystem nach Anspruch 16, bei dem während des Verbindens die beiden Kupplungen (32, 42) um eine vorbestimmte Entfernung relativ zueinander bewegt werden, während die Terminalkupplung (42) auf das Fühlelement wirkt, wobei die Bewegung des Fühlelementes eine Bewegung des Klappenelementes bewirkt, so dass das Zugwagenventil (3) öffnet.

18. Dampfrückgewinnungssystem nach Anspruch 15 oder 17, wobei das Terminalventil (4) und/oder das Zugwagenventil (3) ein Mittel aufweist, um zu bewirken, dass wenigstens ein Teil des Klappenelementes sich um eine größere Entfernung bewegt als die genannte vorbestimmte Entfernung.

19. Dampfrückgewinnungssystem nach Anspruch 18, bei dem das genannte Mittel den horizontalen Hub, der zum Bewirken der Verschiebung der jeweiligen Klappe (352, 452) zum Öffnen der Ventile zur Verfügung steht, in eine Rotationsbewegung der Klappe umwandelt.

20. Dampfrückgewinnungssystem nach Anspruch 19, bei dem das genannte Mittel durch eine Hebelwirkung funktioniert, um eine größere Bewegung des Klappenelementes (352, 452) zu bewirken, so dass es aus dem Dampfströmungspfad hinaus geschwenkt werden kann.

21. Dampfrückgewinnungssystem nach einem der Ansprüche 14 bis 20, wobei das Fühlelement in dem Terminalventil (4) ein Bolzen (455) ist, auf den eine Nase (323) der Zugwagenkupplung wirkt.

22. Dampfrückgewinnungssystem nach Anspruch 21, bei dem eine Dichtung zwischen der Zugwagenkupplung (32) und der Terminalkupplung (42) zwischen der äußeren Flanke dieser Nase (323) und einem in der Terminalkupplung (42) montierten Dichtungsring bewirkt wird.

23. Ventil nach Anspruch 1 oder ein Dampfrückgewinnungssystem nach einem der Ansprüche 2 bis 22, bei dem das, ein oder jedes Ventil eine Drehfeder (457) beinhaltet, die so gestaltet ist, dass sie auf das Klappenelement (352, 452) wirkt, um es zu schließen.

24. Ventil oder Dampfrückgewinnungssystem nach Anspruch 23, wobei die Drehfeder (457) zentral auf das Klappenelement wirkt.

25. Dampfrückgewinnungssystem nach einem der Ansprüche 2 bis 24, wobei das Zugwagenventil (3) ein integriertes Fühlventil beinhaltet.

26. Dampfrückgewinnungssystem nach Anspruch 25, wobei das Fühlventil automatisch aktiviert wird, wenn die beiden Kupplungen (32, 42) zusammengebracht werden, so dass ein Absperrventil öffnet.

## Revendications

1. Clapet (3,4) pour système de récupération de vapeur, comprenant un corps ayant une entrée et une sortie, un volet (352, 452) fixé au corps (31, 41) par une articulation (351, 451) et un anneau d'étanchéité (33, 43) monté dans le corps, le volet pouvant prendre appui contre l'anneau d'étanchéité pour assurer un joint étanche à la vapeur et pouvant s'ouvrir de manière à offrir un chemin d'écoulement des vapeurs essentiellement exempt d'obstruction entre l'entrée et la sortie.

2. Système de récupération de vapeur comportant un clapet de camion (3) et un clapet de terminal (4), au moins l'un des clapets étant conforme à la revendication 1.

3. Système de récupération de vapeur selon la revendication 2, dans lequel le clapet conforme est le clapet du camion.

4. Système de récupération de vapeur comportant un clapet de camion (3) et un clapet de terminal (4), chacun étant conforme à la revendication 1.

5. Système de récupération de vapeur selon l'une quelconque des revendications 2 à 4 comportant un clapet anti-retour (5), le clapet anti-retour (5) étant conforme à la revendication 1.

6. Système de récupération de vapeur selon la revendication 5, dans lequel le clapet anti-retour (5) est situé après le clapet du camion (3) et le clapet du terminal (4) dans l'ordre d'écoulement de la vapeur pendant la décharge.

7. Système de récupération de vapeur selon la revendication 5 ou la revendication 6, dans lequel le clapet anti-retour (5) est monté dans une position au-dessus du clapet du terminal (3) et orienté verticalement de telle sorte que le volet (55) se ferme sous son propre poids.

8. Système de récupération de vapeur selon l'une quelconque des revendications 2 à 7, dans lequel le ou chaque clapet (3, 4, 5) comporte un évidement (311, 411, 511) qui peut recevoir le volet lorsque le clapet est ouvert.

9. Clapet (3, 4) selon la revendication 1, dans lequel le clapet (3, 4) comporte un évidement qui peut recevoir le volet lorsque le clapet est ouvert.

10. Système de récupération de vapeur selon l'une quelconque des revendications 2 à 7, dans lequel le ou chaque clapet comporte un viseur transparent (SG).

11. Clapet selon la revendication 1 dans lequel le clapet comporte un viseur transparent (SG).

12. Système de récupération de vapeur selon la revendication 10, ou clapet selon la revendication 1, dans lequel le viseur transparent (SG) est un viseur divisé qui permet de mesurer le carburant retenu et l'examen des éléments intérieurs du clapet.

13. Système de récupération de vapeur selon l'une quelconque des revendications 2 à 12, dans lequel un coupleur de camion (32) est relié au clapet du camion (3) et un coupleur de terminal (42) est relié au clapet du terminal (4).

14. Système de récupération de vapeur selon la revendication 13, dans lequel, lorsque les deux coupleurs (32, 42) sont rapprochés, une partie du coupleur du camion (32) agit sur un élément détecteur dans le coupleur du terminal (42), l'élément détecteur étant directement ou indirectement relié au volet (45) dans le clapet du terminal (4).

15. Système de récupération de vapeur selon la revendication 14, dans lequel, pendant le branchement, les deux coupleurs sont rapprochés l'un de l'autre d'une distance prédéterminée tandis que le coupleur du camion (32) agit sur l'élément détecteur, le mouvement de l'élément détecteur faisant déplacer le volet de telle sorte que le clapet du terminal (4) est ouvert.

16. Système de récupération de vapeur selon l'une quelconque des revendications 13 à 15, dans lequel une partie du coupleur du terminal (42) agit sur un élément détecteur dans le coupleur du camion lorsque les deux coupleurs sont branchés, l'élément détecteur étant directement ou indirectement relié au volet (352) à l'intérieur du clapet du camion (3).

17. Système de récupération de vapeur selon la revendication 16, dans lequel, lors du branchement, les deux coupleurs (32, 42) sont déplacés l'un par rapport à l'autre d'une distance prédéterminée tandis que le coupleur du terminal (42) agit sur l'élément détecteur, le mouvement de l'élément détecteur faisant déplacer le volet de telle sorte que le clapet du camion (3) est ouvert.

18. Système de récupération de vapeur selon l'une quelconque des revendications 15 ou 17, dans lequel le clapet du terminal (4) et/ou du camion (3) comporte un moyen pour faire déplacer au moins une partie du volet d'une plus grande distance que ladite distance prédéterminée.

19. Système de récupération de vapeur selon la revendication 18, dans lequel ledit moyen convertit la course horizontale disponible pour assurer le déplacement du volet respectif (352, 452) pour ouvrir les clapets en un mouvement rotatif du volet.

20. Système de récupération de vapeur selon la revendication 19, dans lequel ledit moyen fonctionne par effet de levier pour assurer un plus grand mouvement du volet (352, 452) de manière à le faire basculer hors du chemin d'écoulement de la vapeur.

21. Système de récupération de vapeur selon l'une quelconque des revendications 14 à 20, dans lequel l'élément détecteur dans le clapet du terminal (4) est une tige (455) sur laquelle agit un embout (323) du coupleur du camion.

22. Système de récupération de vapeur selon la revendication 21, dans lequel un joint d'étanchéité entre les coupleurs du camion (32) et du terminal (42) est réalisé entre le flanc extérieur de cet embout (323) et un anneau d'étanchéité monté dans le coupleur du terminal (42).

23. Clapet selon la revendication 1 ou système de récupération de vapeur selon l'une quelconque des revendications 2 à 22, dans lequel le ou chaque clapet comporte un ressort de torsion (457) qui est agencé pour agir sur le volet (352, 452) et le fermer ainsi.

24. Clapet ou système de récupération de vapeur selon la revendication 23, dans lequel le ressort de torsion (457) agit sur le centre du volet.

25. Système de récupération de vapeur selon l'une quelconque des revendications 2 à 24 dans lequel le clapet du camion (3) comporte un clapet de détection intégré.

26. Système de récupération de vapeur selon la revendication 25, dans lequel le clapet de détection est automatiquement activé lorsque les deux coupleurs (32, 42) sont rapprochés de manière à ouvrir une vanne d'arrêt.
